# EUROPÄISCHE PATENTANMELDUNG

(11) **EP 0 749 810 A1**
(43) Veröffentlichungstag der Anmeldung: **27.12.1996**
(21) Anmeldenummer: 95115549.8
(22) Anmeldetag: 02.10.1995
(51) Int. Cl.: B25J 9/00, B25J 9/04, B25J 19/00

(54) **Roboter**

(30) Priorität: 20.06.1995 DE 29510012 U
(71) Anmelder: Gerhard Schubert GmbH, D-74564 Crailsheim (DE)
(72) Erfinder: Haaf, Walter, D-74564 Crailsheim (DE)
(74) Vertreter: Alber, Norbert

(57) **Zusammenfassung**

Es wird ein Roboter mit zweidimensional arbeitenden Greifarmen (1a,1b) vorgestellt, der trotz ausreichender Schwingungsdämpfung (31) gegenüber dem Untergrund und einer hohen Lebensdauer insbesondere der Lagerungen ein kleines und leichtes Gehäuse (2) aufweist, und der insbesondere für Anwendungsfälle geeignet ist, bei welchen mehrere Roboter benötigt werden. Der Roboter weist zwei Greifarme auf, die von einem gemeinsamen Bett des Roboters abstreben und direkt oder indirekt gegenüber dem gemeinsamen Bett gelagert sind.

## Beschreibung

Die Erfindung betrifft Roboter, wie sie insbesondere bei der Herstellung und Abpackung von Produkten oder zur Handhabung von Einzelteilen oder Montage von Baugruppen verwendet werden. Dabei wird insbesondere hinsichtlich der Bewegungsmöglich-keiten des Greifarmes z. B. in zweidimensional, also nur einer Ebene, arbeitenden oder dreidimensional, also in allen drei Raumrichtungen bewegbaren, Greifarmen unterschieden.

Gerade für das Bestücken, z. B. in der Verpackungsindustrie, werden sehr häufig die gegenüber den dreidimensionalen preisgünstigeren zweidimensionalen Roboter eingesetzt, deren Greifarm z. B. um eine horizontale Achse in einem Gehäuse gelagert ist, und wobei das vordere, freie Ende des Greifarmes dabei in einer senkrecht, rechtwinkelig zur horizontalen Schwenkachse im Gehäuse stehenden Greifebene bewegbar ist. An diesem freien Ende des Greifarmes ist dann wiederum ein Greifelement oder anderes Handhabungselement angeordnet, welches dann entweder wiederum in dieser Greifebene oder auch quer hierzu bewegbar sein kann.

Derartige Roboter, insbesondere Roboter mit dem beschriebenen zweidimensional arbeitenden Greifarm, weisen häufig als Greifarm einen mehrteiligen Knickarm auf, dessen Einzelteile jeweils am freien Ende des vorhergehenden Knickarm-Teiles schwenkbar gelagert sind, wobei die Bewegung jedes einzelnen Teiles des Knickarmes innerhalb des Robotergehäuses mechanisch ausgelöst und entlang des Knickarmes zum jeweiligen Teil hin mechanisch übertragen wird.

Aufgrund der diskontinuierlichen Arbeitsweise jedes einzelnen beweglichen Teiles eines solchen Knickarm-Roboters treten an den die Bewegung mechanisch auslösenden Stellen, also innerhalb des Gehäuses, erhebliche Kräfte und dynamische Schwingungen auf, die vom Gehäuse bzw. dem Untergrund aufgenommen und gedämpft werden müssen.

Üblicherweise sind die gegenüber dem Gehäuse zu verschwen-kenden Wellen für die einzelnen Teile des Knickarmes dabei in einander gegenüberliegenden Gehäuseteilen beidseits gelagert. Bei einseitig aus einem Gehäuse auskragenden Wellen für den Knickarm müßte das Gehäuse als auch die Lagerung für die Wellen im Gehäuse überdimensional stabil und damit schwer ausgebildet sein, um einen zu frühen einseitigen Verschleiß der Wellenlagerungen einerseits sowie unerwünschte einseitige Setzungen des Roboterfundamentes etc. zu vermeiden.

Es ist daher Aufgabe gemäß der Erfindung, einen Roboter zu schaffen, der trotz ausreichender Schwingungsdämpfung gegenüber dem Untergrund und einer hohen Lebensdauer insbesondere der Lagerungen ein kleines und leichtes Gehäuse aufweist, und der insbesondere für Anwendungsfälle geeignet ist, bei welchen mehrere Roboter benötigt werden.

Diese Aufgabe wird durch die kennzeichnenden Merkmale des Anspruches 1 gelöst. Vorteilhafte Ausführungsformen ergeben sich aus den Unteransprüchen.

Die Nachteile von einseitig aus einem Gehäuse frei auskragenden Wellen, die an ihrem freien Ende den Greifarm des Roboters tragen, lassen sich weitestgehend vermeiden, wenn von einem gemeinsamen Bett des Roboters mehrere, Greifarme tragende Wellen auf einander gegenüberliegenden Seiten bzw. voneinander wegweisend abstreben.

Insbesondere können dabei von einem gemeinsamen Bett von zwei gegenüberliegenden Seiten jeweils in voneinander weg weisende Richtungen Wellen abragen, die jeweils einen Greifarm an ihrem frei auskragenden Ende tragen, sodaß diese Greifarme - bei einem zweidimensional arbeitendem Greifarm, von dem in der Folge ausschließlich und zwar in der Ausbildung als Knickarm, die Rede sein soll ohne die Erfindung hierauf zu beschränken - die in zwei parallelen Greifebenen arbeiten.

Das gemeinsame Bett des Roboters ist dabei so stabil ausgebildet, daß es trotz der auftretenden Kräfte und Schwingungen nicht selbst verformt wird. Dadurch ist es möglich, z. B. das Bett als massive Bodenplatte auszubilden, und lediglich diese Bodenplatte über schwingungsdämpfende Elemente gegenüber dem Untergrund zu befestigen.

Eine andere Möglichkeit besteht darin, die jedem der Greifarme zugeordneten Wellen in einem separaten Innengehäuse zu lagern, das gemeinsame Bett als stabiles Außengehäuse auszubilden und jedes der Innengehäuse gegenüber dem gemeinsamen Außengehäuse schwingungsdämpfend zu lagern.

In beiden Fällen werden einseitige Belastungen des Untergrundes vermieden und insbesondere der bauliche Aufwand für die Schwingungsdämpfung pro Greifarm deutlich reduziert.

Als Schwingungselemente kommen an sich bekannte Bauteile wie aus Hartgummiplatten und Metallplatten geschichtete sogenannte Schwingmetalle oder auch mittels viskoser Stoffe, die sich zwischen einem Stößel und einem umgebenen Topf befinden, wirkende Viskose-Schwingungsdämpfer ebenso in Frage wie aktive, elektronisch gesteuerte Schwingungsdämpfer.

Neben der Lösung, zwei Greifarme um eine durchgehende, fluchtende Schwenkachse in einem gemeinsamen Gehäuse oder zwei benachbarten, fluchtenden, separaten Innengehäusen zu lagern, sind demgemäß auch Bauformen mit drei oder mehr Greifarmen denkbar, beispielsweise eine Bauform mit vier Greifarmen, deren jeweilige, tragende und im Gehäuse gelagerte Wellen aus jeweils einer der Seiten des viereckigen Bettes hervorragen, und damit wieder eine gleichmäßige Belastung des Bettes ergeben.

Bei Anordnung von zwei auf gegenüberliegenden Seiten eines Bettes angeordneten Greifarmen mit gemeinsamer, fluchtender Schwenkachse gegenüber dem Bett des Roboters ergibt sich der zusätzliche Vorteil, daß - je nach Anwendungsaufgabe - unter Umständen einzelne Teile des Knickarmes aufgrund der Aufgaben-stellung immer nur parallel zueinander bewegt werden müssen.

In diesem Fall ist es möglich, die einander entsprechenden Wellenteile der beiden Greifarme bereits innerhalb des Gehäuses mechanisch drehfest miteinander zu koppeln, und über nur einen gemeinsamen Antrieb und eine gemeinsame Steuerung anzutreiben. Dies ergibt eine optimale Anpassung an die einzelnen Bearbeitungsaufgaben bei geringstmöglicher Anzahl unterschiedlicher Einzelteile für den Roboter, da die Einzelteile der den jeweiligen Greifarmen zugeordneten Wellen, Lagerungen und sonstigen Einzelteile innerhalb des Roboters großenteils baugleich sind und lediglich spiegelverkehrt montiert werden.

Die genannten Vorteile gelten insbesondere für Knickarm-Roboter, bei denen die einzelnen Teile des Knickarmes über Parallelogramme entlang des Knickarmes mit dem Gehäuse des Roboters verbunden sind, und die Bewegungen der einzelnen Teile des Knickarmes mechanisch bereits innerhalb des Gehäuses von separaten Stell-motoren ausgelöst werden, da gerade in diesem Fall der Knickarm selbst als dämpfendes Element wegfällt, und somit das Gehäuse bzw. Bett des Roboters besonders gut schwingungsgedämpft gegenüber dem Untergrund bzw. der Umgebung ausgebildet sein muß.

Eine Ausführungsform gemäß der Erfindung ist anhand der Figur näher beschrieben. Es zeigen
- Figur 1:: einen erfindungsgemäßen Roboter mit zwei Knickarmen in der Seitenansicht,
- Figur 2:: den Roboter gemäß Figur 1 in der Ansicht von hinten,
- Figur 3:: den Roboter gemäß Figur 1 in der Aufsicht und
- Figur 4:: eine Bauform des Roboters in einem vertikalen Schnitt entlang der Schwenkachse (18).

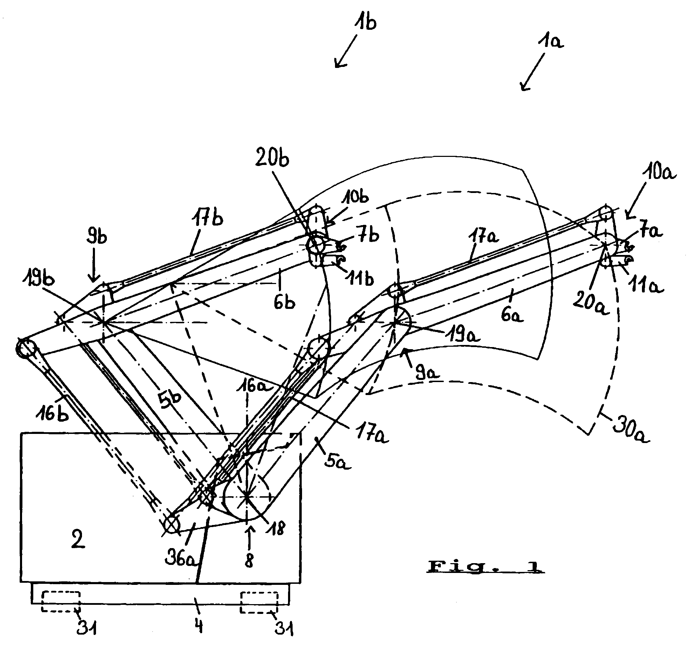

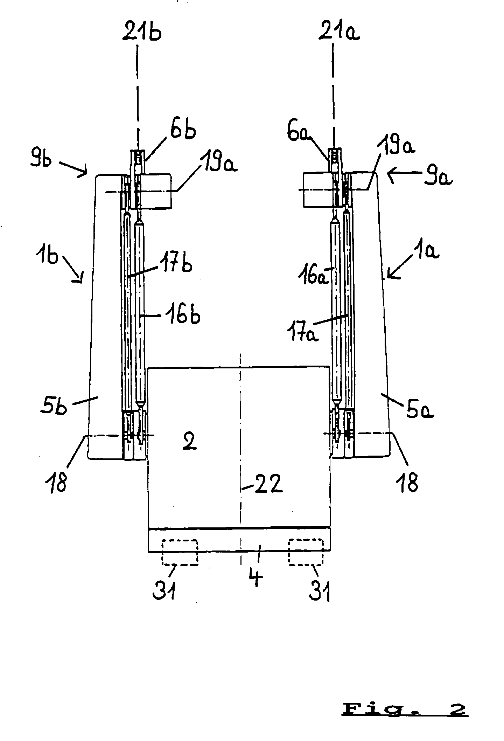

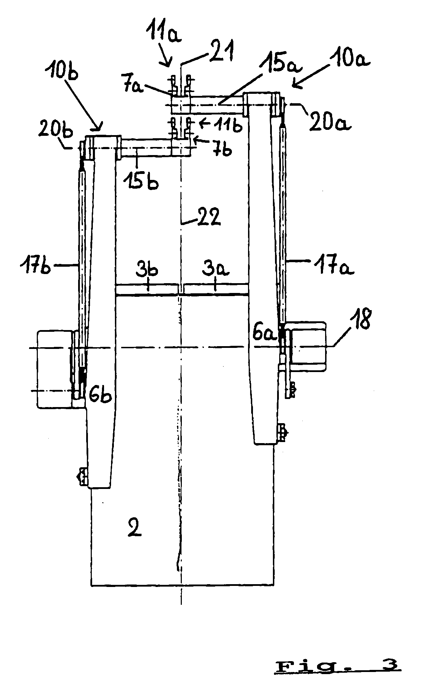

Figur 1 zeigt einen Roboter mit zwei Knickarmen 1a, 1b in der Seitenansicht, während Figur 2 den gleichen Roboter in der Rückansicht, also in Figur 1 von links betrachtet, zeigt und Figur 3 eine - im Bereich des Handteiles geringfügig abgewandelte - Aufsicht auf diesen Roboter darstellt.

Wie anhand der Figuren 2 und 3 zu erkennen, sind die beiden Knickarme 1a, 1b an den gegenüberliegenden Seiten des Außengehäuses 2 parallel zueinander angeordnet und bezüglich dieses Außengehäuses 2 um eine gemeinsame, fluchtende Schwenkachse 18 im Inneren des Gehäuses gelagert. Dadurch erfährt der gesamte Roboter einen im wesentlichen zur Symetrieebene 22, der vertikalen Mittelebene parallel zur Bewegungsebene 21a, bzw. 21b der Knickarme, spiegelbildliche Ausgestaltung.

Das Außengehäuse 2 sitzt auf einer stabilen Bodenplatte 4. Die Schwingungsdämpfer 31 sind dabei ganz oder teilweise in der Bodenplatte 4 integriert und ragen aus ihr geringfügig nach unten heraus, sodaß sie eine Dämpfung zwischen der in sich stabilen Bodenplatte 4 und dem Untergrund bieten. Alternativ können die Schwingungsdämpfer 31 auch unter die Bodenplatte 4 gesetzt sein.

Wie am besten in Figur 1 zu erkennen, ist von jedem der Knickarme 1a, 1b der Oberarm 5a um die Schwenkachse 18 innerhalb des Gehäuses 2 schwenkbar gelagert, wodurch die Schulterlagerung 8 gebildet wird.

Am freien Ende des Oberarmes 5a bzw. 5 b ist jeweils der Unterarm 6a bzw. 6b um die Unterarmschwenkachse 19a, 19b schwenkbar gelagert, welche parallel zur Schwenkachse 18 im Gehäuse verläuft.

Der Unterarm 6a bzw. 6b kann gegenüber dem Oberarm 5a bzw.

5 b verschwenkt werden indem er über die Unterarmschwenkachse 19a hinaus nach hinten verlängert ist und von dort aus über eine gelenkige Verbindung ein Unterarm-Parallelogramm 16a zur Schwenkachse 18 gebildet wird, wobei der Oberarm 5a eine der beiden parallelen Elemente des Parallelogramms bildet.

Durch Verschwenken des zum hinteren Ende des Unterarmes 6a analogen Fortsatzes 31a, der von der Schwenkachse 18 abstrebt, wird somit über das Parallelogramm 16a eine Schwenkbewegung des Unterarmes 6a gegenüber dem Oberarm 5a von einem Auslöser der Schwenkbewegung innerhalb des Gehäuses 2 über den Fortsatz 31a auf den Unterarm 6a übertragen.

In analoger Ausbildung ist am freien Ende des Unterarmes 6a bzw. 6b jeweils ein Handhebel 7a bzw. 7b um eine Hand- Schwenkachse 20a bzw. 20b schwenkbar gelagert, welche wiederum parallel zur Schwenkachse 18 liegt. Damit ergibt sich eine bei horizontaler Lage der Schwenkachse 18 vertikale, hierzu im rechten Winkel stehende Greifebene 21a, 21b für die beiden Knickarme 1a, 1b, wobei das Bewegungsfeld 30a für die Hand- Schwenkachse 20a in Figur 1 eingezeichnet ist.

Gegenüber den Handhebeln 7a bzw. 7b ist ein Greifelement 11a bzw. 11b beweglich oder auch zusätzlich fest am Handhebel 7a bzw. 7b angeordnet, mit dessen Hilfe die gewünschte Handhabung am Produkt vorgenommen wird.

Die Abweichung der Ausführungsform gemäß Figur 3 gegenüber den Figuren 1 und 2 liegt darin, daß bei Figur 3 die Handhebel 7a bzw. 7b entlang ihrer Hand-Schwenkachsen 20a bzw. 20b und damit quer zur Richtung der Unterarme 6a bzw. 6b versetzt sind. Der Versatz erfolgt dabei - obwohl er auch nach außen hin erfolgen könnte - zur Symetrie-Ebene 22 des Roboters hin, wobei das verwendete Hand-versatzteil 15a bzw. 15b eine solche Länge aufweist, daß die Greif-elemente 11a, 11b der Knickarme 1a, 1b sich nunmehr in einer gemeinsamen Greifebene 21 befinden, und damit Handhabungen z. B. am gleichen Teil durchführen können, was beispielsweise dann von Vorteil ist, wenn das zu handhabende Teil in der Greifebene 21 gedreht werden muß oder Ähnliches.

Analog zum Unterarm 6a bzw. 6 b wird auch der Handhebel 7a bzw. 7b über ein Parallelogramm 17a vom Inneren des Gehäuses 2 aus angetrieben, wobei wegen der dazwischen angeordneten Schulterlagerung 9a bzw. 9b das Parallelogramm 17a mehrere beweglich miteinander verbundene Einzelteile und Streben umfaßt als das Unterarm-Parallelogramm 16a.

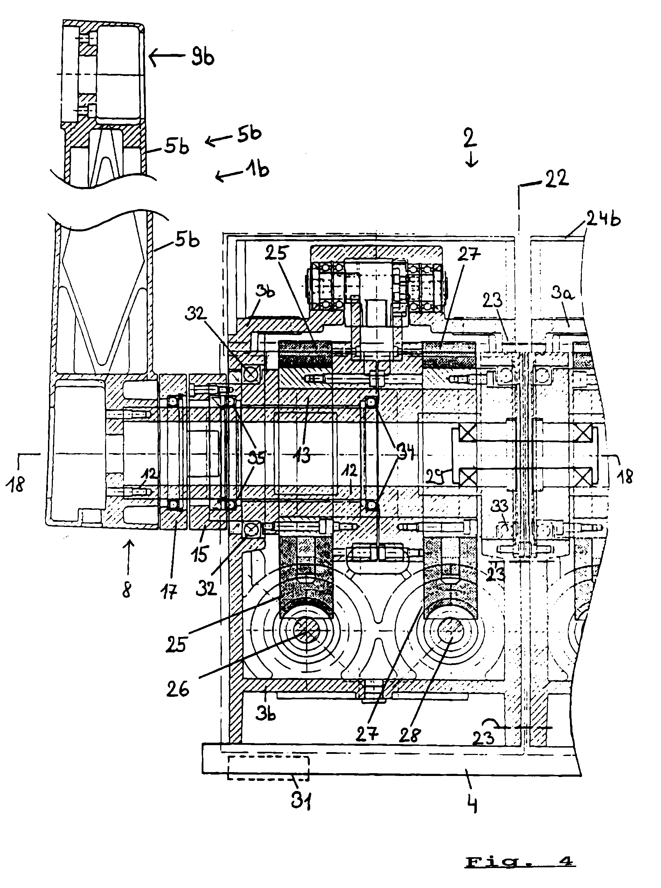

In Figur 4 ist der Roboter gemäß den Figuren 1 bis 3 in einem vertikalen Schnitt entlang der Schwenkachse 18 teilweise dargestellt, wobei der Knickarm 1b lediglich noch den Oberarm 5 zeigt, und die am freien Ende des Oberarmes 5 ersichtliche Durch- gangsöffnung für die Ellbogenlagerung 9 zur Aufnahme des Unterarmes 6b.

In Figur 1 ist die drehfeste Verbindung mittels Verschrauben des Oberarmes 5b mit dem frei aus dem Gehäuse 2 herausragenden Ende der Oberarmwelle 12 mittels Verschraubung zu erkennen. Die Oberarmwelle 12 ist dabei als Hohlwelle ausgebildet. In ihrem vorderen, dem Knickarm 1b zugewandten Bereich noch innerhalb des Gehäuses 3b ist die Oberarmwelle 12 von der als Hohlwelle ausgebildeten Unterarmwelle 13 koaxial umgeben.

Oberarmwelle 12 und Unterarmwelle 13 sind dabei ineinander und im Gehäuse 3b mittels der Lager 32 bis 35 gelagert. Im hinteren Bereich erfolgt der Schwenkantrieb der Oberarmwelle 12 über das drehfest mit der Oberarmwelle 12 verbundene Oberarm-Schneckenrad 27, welches von einer lotrecht zur Zeichenebene der Figur verlaufende Oberarmschnecke 28, die drehfest mit einem nicht dargestellten Motor gekoppelt ist, wirkverbunden ist. In gleicher Weise wird die Unterarmwelle 13 über ein Unterarm-Schneckenrad 25 und eine Unterarmschnecke 26 von einem anderen Motor angetrieben.

Wie Figur 4 ferner zeigt, sind die beiden Innengehäuse 3a, 3b auf der gemeinsamen in sich stabilen Bodenplatte 4 befestigt, welche gegenüber dem Untergrund mittels Schwingungsdämpfern 31 befestigt ist. Um zusätzlich das Schwingungsverhalten zu verbessern, können die symetrisch ausgebildeten stabilen Innengehäuse 3a, 3b über Gehäuseverschraubungen 23 fest miteinander verbunden oder auch einstückig ausgebildet sein, was jedoch die Montage erschwert.

Zusätzlich können über eine Verbindungswelle 29, die sich über die Symetrie-Ebene 22 hinweg erstreckt, wie dargestellt die hohl ausgebildeten Oberarmwellen 12 an ihren rückwärtigen Enden gegenseitig abgestützt werden, sofern die Oberarmwellen 12 gegenüber der Verbindungswelle 29 drehbar gelagert sind.

Unter Wegfall dieser Lagerung können die beiden Oberarmwellen 12 - je nach Anwendungsfall - auch drehfest miteinander verbunden werden, oder es kann die gleiche Abstützung durch drehbare Lagerung oder auch drehfeste Verbindung auch oder zusätzlich zwischen den Unterarmwellen 13 herbeigeführt werden, was durch entsprechend lang oder kurz ausgebildete Verbindungswellen 29 erzielbar ist.

## Patentansprüche

1. Roboter mit wenigstens einem, insbesondere nur zweidimensional arbeitenden, Greifarm,
**dadurch gekennzeichnet, daß**
- der Roboter zwei Greifarme aufweist und
- die Greifarme von einem gemeinsamen Bett des Roboters abstreben und direkt oder indirekt gegenüber dem gemeinsamen Bett gelagert sind.

2. Roboter nach Anspruch 1,
**dadurch gekennzeichnet, daß**
die Greifarme von gegenüberliegenden Seiten des Bettes abstreben.

3. Roboter nach einem der vorhergehenden Ansprüche,
**dadurch gekennzeichnet, daß**
das gemeinsame Bett gegenüber dem Untergrund schwingungsdämpfend, insbesondere mittels Schwingmetallen, gelagert ist.

4. Roboter nach einem der vorhergehenden Ansprüche,
**dadurch gekennzeichnet, daß**
das Bett des Roboters im wesentlichen aus einer stabilen Bodenplatte (4) besteht.

5. Roboter nach einem der vorhergehenden Ansprüche,
**dadurch gekennzeichnet, daß**
das Bett des Roboters ein für beide Greifarme gemeinsames Außengehäuse (2) umfaßt.

6. Roboter nach einem der vorhergehenden Ansprüche,
**dadurch gekennzeichnet, daß**
jeder der beiden Greifarme von einem Innengehäuse (3a, 3b) abstrebt und die Innengehäuse (3a, 3b) in einem gemeinsamen Außengehäuse (2) untergebracht und gegenüber diesem schwingungsgedämpft, insbesondere mittels Schwingmetallen, befestigt sind.

7. Roboter nach einem der vorhergehenden Ansprüche,
**dadurch gekennzeichnet, daß**
der Greifarm an seinem vorderen freien Ende ein Greifelement (11) aufweist und alle Bewegungen des Greifarmes und/oder des Greifelementes (11) innerhalb des Gehäuses mechanisch veranlaßt und mechanisch entlang des Greifarmes übertragen sind.

8. Roboter nach einem der vorhergehenden Ansprüche,
**dadurch gekennzeichnet, daß**
- der Greifarm ein wenigstens zweiteiliger Knickarm (1) ist,
- der Knickarm (1) im Gehäuse um eine Schwenkachse (18) schwenkbar gelagert ist und
- der Knickarm (1) wenigstens einen Oberarm (5) aufweist, an welchem weitere Teile des Knickarmes (1) schwenkbar befestigt sind.

9. Roboter nach einem der vorhergehenden Ansprüche,
**dadurch gekennzeichnet, daß**
jedes der Teile des Knickarmes (1) gegenüber dem jeweils freien Ende des vorangehenden Teiles des Knickarmes um eine Schwenkachse (18) schwenkbar gelagert ist und die Drehung um diese Schwenkachse mittels Parallelogrammanlenkung von einer innerhalb des Gehäuses bewirkten Drehung einer zur Schwenkachse (18) koaxialen Welle aus übertragen wird.

10. Roboter nach einem der vorhergehenden Ansprüche,
**dadurch gekennzeichnet, daß**
- der Knickarm (1) aus einem Oberarm (5) und einem am Oberarm um eine Unterarmschwenkachse (19) verschwenkbaren Unterarm (6) besteht,
- am freien Ende des Unterarmes (6) ein Handhebel (7) um eine Hand-Schwenkachse (20) verschwenkbar ist und
- die Schwenkachse (18) im Gehäuse, die Unterarmschwenkachse (19) und die Hand-Schwenkachse (20) zueinander parallel verlaufen.

11. Roboter nach einem der vorhergehenden Ansprüche,
**dadurch gekennzeichnet, daß**
- der Unterarm (6) über ein Unterarm-Parallelogramm (16) mit einer Unterarmwelle im Gehäuse verbunden ist,
- der Handhebel (7) über ein Hand-Parallelogramm (17) mit einer Handwelle (14) im Gehäuse verbunden ist,
- der Oberarm (5) über eine Oberarmwelle (12) im Gehäuse schwenkbar gelagert ist und
- die Unterarmwelle (13) und die Handwelle (14) innerhalb des Gehäuses gegenüber dem Gehäuse und/oder gegenüber der Oberarmwelle (12) schwenkbar um die Schwenkachse (18) gelagert sind.

12. Roboter nach einem der vorhergehenden Ansprüche,
**dadurch gekennzeichnet, daß**
die Oberarmwellen (12a, 12b), die Unterarmwellen (13a, 13b), und die Handwellen (14a, 14b) in einem gemeinsamen Außengehäuse (2) gelagert sind.

13. Roboter nach einem der vorhergehenden Ansprüche,
**dadurch gekennzeichnet, daß**
die Oberarmwelle (12a), die Unterarmwelle (13a), die Handwelle (14a) in einem Innengehäuse (3a) sowie die Oberarmwelle (12b), die Unterarmwelle (13b), die Handwelle (14b) in einem Innengehäuse (3b) gelagert sind und die Innengehäuse (3a, 3b) gegenüber dem Außengehäuse (2) schwingungsdämpfend aufgenommen sind.

14. Roboter nach einem der vorhergehenden Ansprüche,
**dadurch gekennzeichnet, daß**
- das Greifelement (11) gegenüber der Längsachse des Unterarmes (6) mittels eines Handversatzteiles (15) seitlich versetzt angeordnet ist,
- das Handversatzteil (15) vom Unterarm (6) aus auf den jeweils anderen Greifarm des Roboters zu abragt und eine solche Länge aufweist, daß die beiden Greifelemente (11a, 11b) in einer gemeinsamen, zur Schwenkachse (18) lotrechten, Greifebene (21) arbeiten.

15. Roboter nach einem der vorhergehenden Ansprüche,
**dadurch gekennzeichnet, daß**
die Oberarmwellen (12a, 12b) drehfest miteinander verbunden oder mit nur einem gemeinsamen Antrieb ausgestattet sind.
